# EUROPÄISCHE PATENTSCHRIFT

(11) **EP 2 993 422 B1**
(45) Veröffentlichungstag und Bekanntmachung des Hinweises auf die Patenterteilung: **11.01.2017**
(21) Anmeldenummer: 15176397.6
(22) Anmeldetag: 13.07.2015
(51) Int. Cl.: F24F 13/14, F24F 11/047

(54) **VOLUMENSTROMREGLER**
VOLUME FLOW REGULATOR
RÉGULATEUR DE DÉBIT

(30) Priorität: 21.07.2014 DE 202014103345 U
(43) Veröffentlichungstag der Anmeldung: 09.03.2016
(73) Patentinhaber: Wildeboer, Werner, 26826 Weener (DE)
(72) Erfinder: Dahms, Arne, 26826 Weener (DE); Harms, Thomas, 26605 Aurich (DE)
(74) Vertreter: Ter Meer Steinmeister & Partner

(56) Entgegenhaltungen:
- DE-U1-202004 003 811

## Beschreibung

Die Erfindung betrifft einen Volumenstromregler mit einem schwenkbar in einem Strömungskanal angeordneten Klappenblatt, einer Biegefeder, die so mit dem Klappenblatt gekoppelt ist, das die Bewegung des Klappenblattes eine Bewegung der Biegefeder bewirkt, und mit einem Einstellelement, das einen Anschlag für die Biegefeder bildet.

Solche Volumenstromregler werden beispielsweise in lüftungstechnischen Anlagen zur Regelung und damit Begrenzung eines Luftstromes eingesetzt. Wenn das Klappenblatt von der Luft umströmt wird, so führen aerodynamische Kräfte dazu, dass auf das Klappenblatt ein Schließmoment wirkt, das die Tendenz hat, das Klappenblatt in die Schließstellung zu schwenken. Die Stärke dieses Schließmoments ist von der jeweiligen Winkelstellung des Klappenblattes und von der Strömungsgeschwindigkeit und damit vom Volumenstrom abhängig. Die Schwenkbewegung des Klappenblattes hat zur Folge, dass die Biegefeder gegen den durch das Einstellelement gebildeten Anschlag bewegt wird und der Anschlag eine Biegeverformung der Feder verursacht. Aufgrund der Kopplung mit dem Klappenblatt wirkt die Biegespannung der Feder auf das Klappenblatt zurück, so dass ein in Öffnungsrichtung des Klappenblattes wirkendes Rückstellmoment erzeugt wird. Das Klappenblatt nimmt eine Stellung ein, in der das vom Volumenstrom abhängige Schließmoment und das Rückstellmoment im Gleichgewicht sind. Da die Stellung des Klappenblattes den Volumenstrom durch den Strömungskanal bestimmt, lässt sich eine mechanisch selbsttätige Regelung des Volumenstromes erreichen. Der Sollvolumenstrom kann dabei mit Hilfe des Einstellelements eingestellt werden.

Aus EP 1 134 507 1 ist ein Volumenstromregler dieser Art bekannt, bei dem das Einstellelement durch einen Unterstützungskörper gebildet wird, an dem die Biegefeder abwälzt, wenn sie durch das Klappenblatt ausgelenkt wird. Zur Einstellung des Volumenstroms wird der Unterstützungskörper um einen exzentrisch angeordneten Drehpunkt verdreht. Die Rückstellkennlinie, die das Rückstellmoment in Abhängigkeit von der Winkelstellung des Klappenblattes angibt, ist somit einerseits von der Einstellposition des Unterstützungskörpers und andererseits von der Kontur dieses Unterstützungskörpers abhängig, an der die Biegefeder abwälzt.

Aus DE 20 2004 003 811 U1 ist ein Volumenstromregler gemäß dem Oberbegriff von Anspruch 1 bekannt.

Aufgabe der Erfindung ist es, einen Volumenstromregler zu schaffen, mit dem sich andere Verläufe der Rückstellkennlinie realisieren lassen.

Diese Aufgabe wird erfindungsgemäß dadurch gelöst, dass das Einstellelement ein Ausleger ist, der an einem Ende einstellbar gehalten ist und dessen anderes Ende die Form einer Klinge hat, die den Anschlag für die Biegefeder bildet und bei fortgesetzter Bewegung der Biegefeder an dieser entlang gleitet.

Die Form der Rückstellkennlinie wird in diesem Fall einerseits durch die Position des Anschlags und andererseits durch die Eigenschaften der Biegefeder sowie durch die Gleitbewegung bestimmt, die zu einer Änderung der wirksamen Biegelänge der Feder und damit zu einer Änderung der Federkennlinie führt.

Vorteilhafte Ausgestaltungen sind in den Unteransprüchen angegeben.

In einer vorteilhaften Ausführungsform ist das als Ausleger ausgebildete Einstellelement seinerseits biegeelastisch, so dass, wenn die Biegefeder durch das Einstellelement ausgelenkt wird und an diesem entlang gleitet, auch das Einstellelement elastisch ausgelenkt wird. Die Rückstellkennlinie lässt sich dann nicht nur über die Federkennlinie der Biegefeder, sondern auch über die Federkennlinie des Einstellelements beeinflussen. Bevorzugt ist die Biegefeder so mit dem Klappenblatt gekoppelt, dass sie bei der Bewegung des Klappenblattes um ein ortsfestes Ende geschwenkt wird. Beispielsweise kann zu diesem Zweck ein Ende der Biegefeder fest an der Achse des Klappenblattes angebracht sein.

Auch das Einstellelement ist vorzugsweise um eine ortsfeste Achse schwenkbar. Dabei kann die Schwenkachse des Einstellelements so angeordnet sein, dass die Schwenkachsen der Biegefeder und des Einstellelements und der Berührpunkt, an dem die Biegefeder an dem Anschlag anliegt, ein spitzwinkliges Dreieck bilden, mit dem spitzen Winkel am Berührpunkt. Durch Verschwenken des Einstellelements lässt sich dann über die Biegefeder die Winkelstellung des Klappenblattes einstellen, in der die Biegefeder an dem durch das Einstellelement gebildeten Anschlag anliegt, ohne dass es zu einer elastischen Auslenkung kommt. Wenn diese Winkelstellung beispielsweise so gewählt wird, dass sie kurz vor der Schließstellung des Klappenblattes liegt, so lassen sich auch sehr kleine Volumenströme feinfühlig regulieren. Generell lässt sich mit dieser Anordnung erreichen, dass die Rückstellkennlinie je nach eingestelltem Sollvolumenstrom mal mehr durch die Biegefeder und mal mehr durch das ebenfalls als Feder ausgebildete Einstellelement beeinflusst wird. Daraus ergibt sich die Möglichkeit, die eine Feder insbesondere für große Sollvolumenströme und die andere Feder für kleinere Sollvolumenströme zu optimieren, so dass über den gesamten Sollvolumenstrombereich ein nahezu optimales Regelverhalten erreicht wird.

Im folgenden werden Ausführungsbeispiele anhand der Zeichnung näher erläutert.

Es zeigen:
- Fig. 1: einen axialen Schnitt durch einen Abschnitt eines Strömungskanals sowie eine schematische Ansicht eines in diesem Strömungskanal angeordneten Volumenstromreglers, der auf einen kleinen Sollvolumenstrom eingestellt ist;
- Fig. 2: eine Außenansicht einer Einstellmechanik des Volumenstromreglers;
- Fig. 3: eine axiale Ansicht des Strömungskanals in Richtung der Pfeile III-III in Fig. 1, mit einem im Schnitt dargestellten Gehäuse für den Volumenstromregler;
- Fig. 4: den Volumenstromregler in der Einstellung nach Fig. 1, jedoch bei stärkerer Auslenkung eines Klappenblattes;
- Fig. 5: den Volumenstromregler in einer Einstellung für mittlere Volumenströme;
- Fig. 6: den Volumenstromregler in einer Einstellung für große Volumenströme;
- Fig. 7: einen Volumenstromregler gemäß einem anderen Ausführungsbeispiel in einer vergrößerten Ansicht entsprechend der Ansicht in Fig. 3; und
- Fig. 8 und 9: eine schematische Darstellungen von Ausschnitten von Volumenstromreglern gemäß weiteren Ausführungsbeispielen.

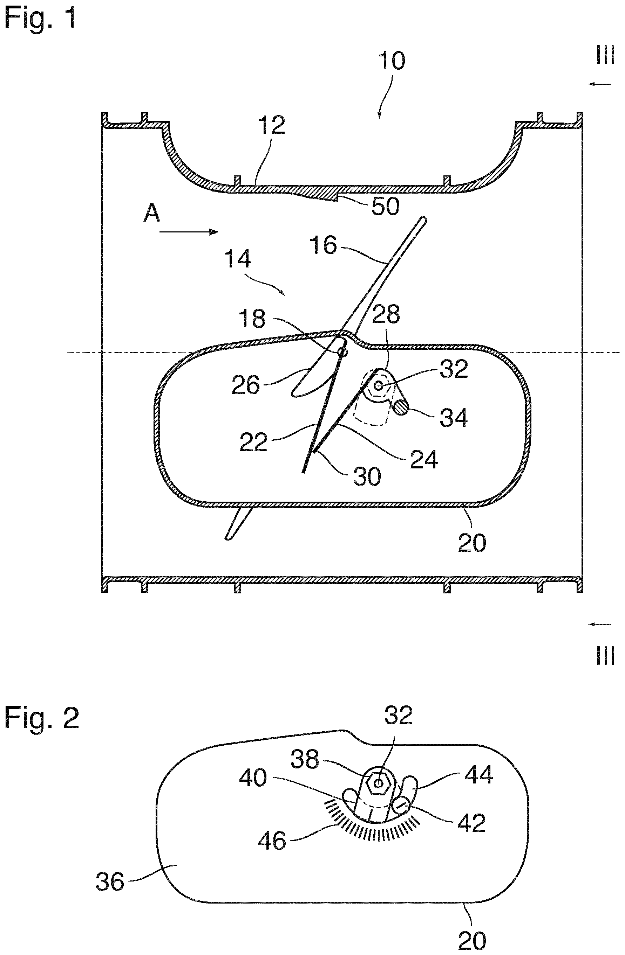

In Fig. 1 ist in einem axialen Schnitt ein Abschnitt eines Strömungskanals 10 gezeigt, der einen kreisförmigen Querschnitt hat, dessen Umfangswand jedoch im Bereich des oberen Scheitels einen Einzug 12 bildet, der den Strömungsquerschnitt lokal verengt.

An der Stelle des Einzugs 12 ist im Inneren des Strömungskanals 10 ein Volumenstromregler 14 angeordnet.

Der Volumenstromregler 14 weist ein Klappenblatt 16 auf, das um eine Achse 18 schwenkbar ist, die senkrecht zur Zeichenebene in Fig. 1 durch die Mitte des kreisförmigen Querschnitts des Strömungskanals 10 verläuft. Ein Ende der Achse 18 verläuft durch den oberen Teil eines vom Inneren des Strömungskanals 10 abgetrennten Gehäuses 20, das die übrigen Teile des Volumenstromreglers 14 aufnimmt, insbesondere eine Rückstellmechanik für das Klappenblatt 16. In Fig. 1 ist eine äußere Abdeckung des Gehäuses 20 fortgelassen, so dass man in das Innere dieses Gehäuses blicken kann.

Zu der Rückstellmechanik für das Klappenblatt gehören eine Biegefeder 22, die in diesem Beispiel als Blattfeder ausgebildet ist, sowie ein Einstellelement 24, das ebenfalls als Blattfeder ausgebildet ist. Ein oberes Ende der Biegefeder 22 ist starr an der Achse 18 gehalten und schmiegt sich an eine Stützkontur eines Unterstützungskörpers 26 an, der ebenfalls starr an der Achse 18 gehalten ist. Im gezeigten Beispiel liegt das an der Achse 18 gehaltene Ende der Biegefeder 22 auf einer Geraden, die durch die Mitte der Achse 18 hindurch geht. In einer anderen Ausführungsform kann die Biegefeder auch versetzt zur Mitte der Achse 18 angeordnet sein oder um eine separate, zu der Achse 18 parallele Achse schwenkbar sein.

Das Einstellelement 24 ist nach Art eines Auslegers an einem Tragkörper 28 gehalten und bildet mit einem klingeartigen freien Ende einen Anschlag 30 für die Biegefeder 22, deren Länge jedoch so bemessen ist, dass sie mit ihrem freien Ende etwas über den Anschlag 30 hinausragt.

Der Tragkörper 28 für das Einstellelement 24 ist um eine Achse 32 drehbar im Gehäuse 20 gehalten und mit Hilfe eines Fixierarmes 34 in der jeweils eingestellten Winkelposition fixierbar.

Fig. 2 zeigt eine Abdeckung 36, die die äußere Verkleidung des Gehäuses 20 bildet und an der eine Einstellmechanik für den Tragkörper 28 und das Einstellelement 24 angeordnet ist. Die Achse 32 durchsetzt die Abdeckung 36 und trägt auf der Außenseite dieser Abdeckung einen Sechskant 38 und einen Zeiger 40, die beide starr mit dem Tragkörper 28 verbunden sind. Die Konturen des Sechskants 38 und des Zeigers 40 sind in Fig. 1 strichpunktiert angedeutet.

Der Fixierarm 34 trägt am freien Ende eine Fixierschraube 42, die einen kreisbogenförmigen Schlitz 44 der Abdeckung 36 durchsetzt und es so erlaubt, den Tragkörper 28 und damit das Einstellelement 24 (Fig. 1) in der jeweils gewählten Winkelposition zu fixieren. An der Abdeckung 36 ist eine Skala 46 angebracht, an der mit Hilfe des Zeigers 40 die jeweils gewählte Winkelposition abgelesen werden kann.

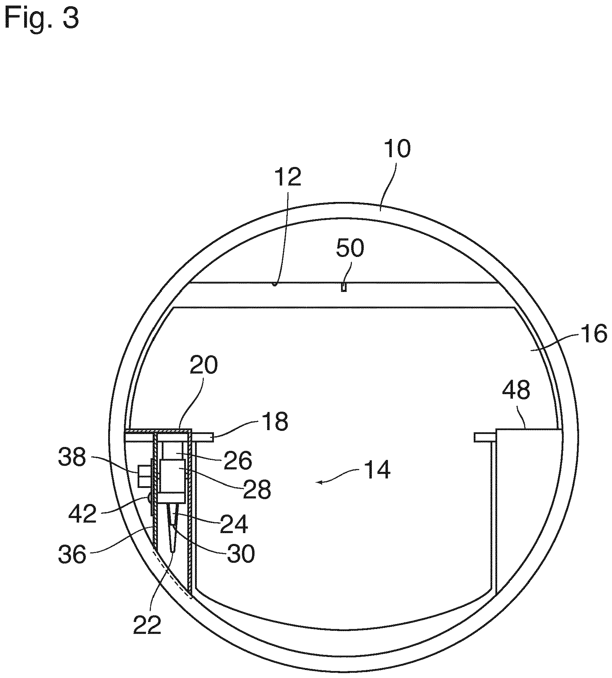

Fig. 3 zeigt eine Rückansicht des hier dargestellten Abschnitts des Strömungskanals 10 sowie einen Schnitt durch das Gehäuse 20. Das Klappenblatt 16 hat einen annähernd T-förmigen Grundriss, mit seitlichen Aussparungen, von denen eine Platz für das Gehäuse 20 bereit stellt. Die Aussparung auf der entgegengesetzten Seite (rechts in Fig. 3) stellt Platz für ein weiteres Gehäuse 48 bereit, in dem beispielsweise ein Dämpfungsmechanismus für das Klappenblatt untergebracht sein kann. Am oberen Scheitel ist das Klappenblatt 16 um die Höhe des Einzugs 12 gekürzt. An diesem Einzug ist ein Anschlag 50 gebildet, an dem das Klappenblatt in der vollständig geschlossenen Stellung mit seinem oberen Rand anschlägt.

Weiterhin erkennt man in Fig. 3, dass die Biegefeder 22 und das Einstellelement 24 jeweils die Form einer Zunge haben, die sich zum freien Ende verjüngt. Zumindest das Einstellelement 24 ist außerdem am freien Ende, das den Anschlag 30 bildet, verrundet. Die sich verjüngenden Querschnittsformen der Biegefeder 22 und des Einstellelements 24 dienen einerseits zum Einstellen der gewünschten Federkennlinien und erleichtern es andererseits, diese Bauelemente in dem sich nach unten verjüngenden Querschnitt des Gehäuses 20 unterzubringen.

Zur Erläuterung der Funktionsweise des Volumenstromreglers 14 soll nun zunächst wieder auf Fig. 1 Bezug genommen werden.

Der Strömungskanal wird in der durch einen Pfeil A angegebenen Richtung von einem Medium, beispielsweise von Luft durchströmt, dessen Volumenstrom geregelt werden soll. Das Klappenblatt 16 wird dabei so umströmt, das die aerodynamischen Kräfte ein Schließmoment erzeugen, das die Tendenz hat, das Klappenblatt in die vollständig geschlossene Stellung zu schwenken, also im Gegenuhrzeigersinn in Fig. 1. Dieses Schließmoment wird durch die T-Form des Klappenblattes noch verstärkt, da die aerodynamischen Kräfte an dem längern, unterhalb der Achse 18 gelegenen Teil des Klappenblattes über einen längeren Hebelarm wirken.

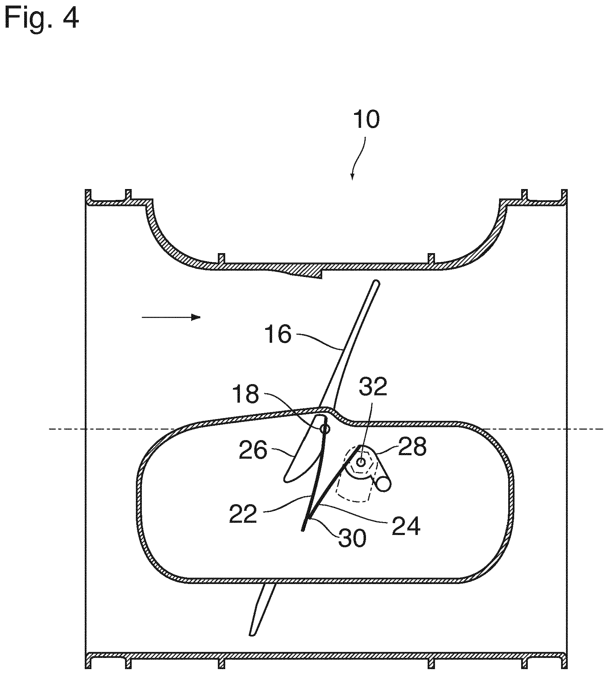

Der Unterstützungskörper 26 und das obere Ende der Biegefeder 22 nehmen an der Schwenkbewegung des Klappenblattes 16 um die Achse 18 teil. Da die Biegefeder 22 jedoch in dem in Fig. 1 gezeigten Zustand bereits an dem Anschlag 30 anliegt, wird die Biegefeder elastisch durchgebogen, wie in Fig. 4 gezeigt ist. Die elastische Rückstellkraft der Biegefeder 22 übt dann ein in Schließrichtung, also im Uhrzeigersinn in Fig. 4 wirkendes Rückstellmoment auf das Klappenblatt 16 aus, das die Tendenz hat, dieses entgegen der Wirkung der aerodynamischen Kräfte wieder in die ursprüngliche Position zurückzustellen. Letztlich nimmt das Klappenblatt 16 daher eine Gleichgewichtsposition ein, in der sich das aerodynamische Schließmoment und das elastische Rückstellmoment die Waage halten. Die Winkelstellung des Klappenblattes 16 bestimmt dann bei gegebenem Druckgefälle den Volumenstrom, der durch den Strömungskanal 10 fließt.

Wenn das Druckgefälle zunimmt, so nimmt das aerodynamische Schließmoment zu, so dass die Drosselklappe weiter in Schließrichtung verschwenkt wird, bis eine neue Gleichgewichtsposition erreicht ist. In der neuen Gleichgewichtsposition ist das Klappenblatt etwas weiter geschlossen, so dass der Volumenstrom trotz des erhöhten Druckgefälles wieder annähernd auf den ursprünglichen Wert zurückgeregelt wird. Um den Volumenstrom mit hoher Genauigkeit konstant halten zu können, ist es allerdings erforderlich, dass die Rückstellkennlinie, die das elastische Rückstellmoment als Funktion der Winkelstellung des Klappenblattes 16 angibt, den richtigen Verlauf hat. Verläuft diese Kennlinie zu steil, so schließt das Klappenblatt nicht weit genug, und die Zunahme des Druckgefälles wird unterkompensiert. Verläuft sie zu flach, wird dagegen die Zunahme des Druckgefälles überkompensiert. Die richtige Steigung der Kennlinie ist dabei für jede Winkelstellung des Klappenblattes und damit für jeden eingestellten Sollvolumenstrom eine andere.

Die hier gezeigte Rückstellmechanik bietet vielfältige Möglichkeiten, den Verlauf der Rückstellkennlinie zu optimieren.

Die Durchbiegung der Biegefeder 22 führt dazu, dass sich diese Feder verkürzt, d.h. dass der Abstand zwischen der Achse 18 und dem freien Ende der Biegefeder 22 abnimmt. Dementsprechend gleitet der durch das Einstellelement 24 gebildete Anschlag 30 an der Biegefeder 22 entlang und verschiebt sich in Richtung auf das freie Ende dieser Biegefeder. In der Tendenz würde dies dazu führen, dass sich die wirksame Biegelänge der Biegefeder 22 vergrößert und dementsprechend die Federkennlinie flacher wird. Falls dieser Effekt nicht erwünscht ist, lässt er sich jedoch durch geeignete Wahl der Stützkontur des Unterstützungskörpers 26 kompensieren oder überkompensieren. Mit zunehmender Durchbiegung schmiegt sich nämlich die Biegefeder 22 allmählich an die Stützkontur des Unterstützungskörpers 26 an, was in der Tendenz zu einer Verkürzung der effektiven Biegelänge führt. Dieser Effekt ist um zu ausgeprägter, je kleiner die Krümmung der Stützkontur ist.

Da im gezeigten Beispiel auch das Einstellelement 24 als biegeelastische Blattfeder ausgebildet ist, kommt es in geringerem Ausmaß auch zu einer elastischen Durchbiegung des Einstellelements 24, was in der Tendenz zu einer Verringerung bzw. einer geringeren Zunahme des Rückstellmoments führt.

In Fig. 4 ist die Einstellposition des Einstellelements 24, d.h. die Winkelstellung des Tragkörpers 28, die gleiche wie in Fig. 1. Bei dieser Einstellung werden, wenn das Klappenblatt 16 die in Fig. 1 gezeigte Winkelstellung einnimmt, weder die Biegefeder 22 noch das Einstellelement 24 elastisch ausgelenkt. Wenn das Klappenblatt aus der in Fig. 1 gezeigten Position heraus weiter in Öffnungsrichtung (im Uhrzeigersinn) verschwenkt wird, so hebt die Biegefeder 22 von dem Anschlag 30 ab. In dem gesamten Winkelbereich von der in Fig. 1 gezeigten Position bis zur Vollständig geöffneten Stellung ist daher die Rückstellkraft null, und die elastische Rückstellkraft setzt erst dann (allmählich) ein, wenn das Klappenblatt über die in Fig. 1 gezeigte Position hinaus in Schließrichtung verschwenkt wird. Das bedeutet, dass erst ab der in Fig. 1 gezeigten Winkelstellung den aerodynamischen Kräften ein Widerstand entgegengesetzt wird. Folglich genügt bereits ein sehr geringer Volumenstrom, das Klappenblatt 16 in die in Fig. 1 gezeigte Position zu verschwenken, und jede weitere Zunahme des Volumenstromes führt dann zu einem weiteren Schließen des Klappenblattes. Bei der in Fig. 1 und 4 gezeigten Einstellung des Einstellelements 24 wird folglich auf einen sehr kleinen Sollvolumenstrom geregelt.

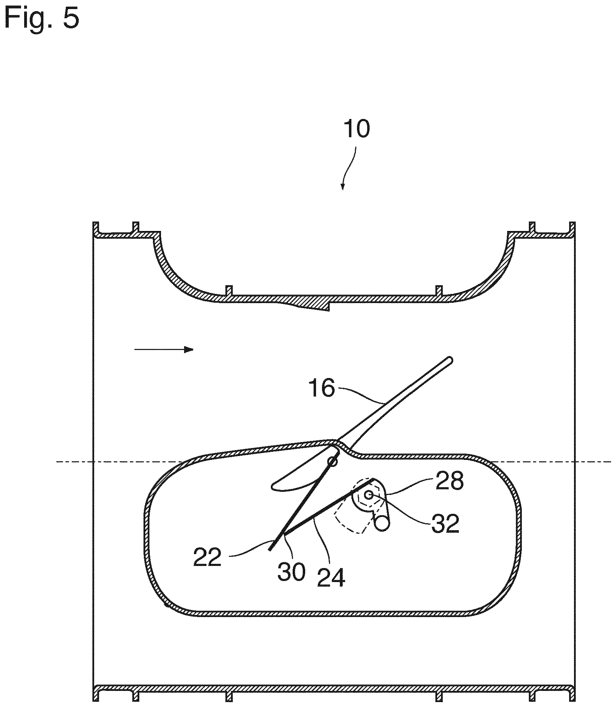

Wenn ein etwas größerer Sollvolumenstrom erwünscht ist, so wird das Einstellelement 24 mit Hilfe des Tragkörpers 28 im Uhrzeigersinn um die Achse 32 gedreht, beispielsweise in die in Fig. 5 gezeigte Position. Da die Biegefeder 22 an dem Anschlag 30 anliegt, wird auch die Biegefeder 22 und mit dieser das gesamte Klappenblatt 16 im Uhrzeigersinn verschwenkt. Die Position, bei der die Biegefeder 22 und das Einstellelement 24 nicht elastisch ausgelenkt sind und somit keine Rückstellkraft auf das Klappenblatt wirkt, wird dann folglich schon bei einer weiter geöffneten Stellung des Klappenblattes erreicht, so dass auf einen entsprechend größeren Sollvolumenstrom geregelt wird.

Wenn das Einstellelement 24 weiter im Uhrzeigersinn um die Achse 32 verschwenkt wird, so wird schließlich die Position erreicht, in der sich das Klappenblatt 16 in der maximal geöffneten Stellung befindet und dennoch die Biegefeder 22 ohne elastische Auslenkung am Anschlag 30 anliegt. Diese Einstellposition entspricht dann einem noch weiter erhöhten Sollvolumenstrom.

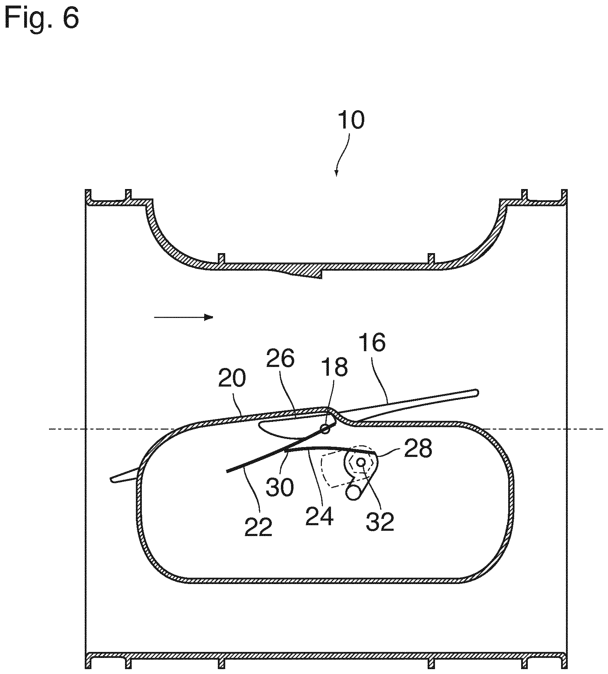

Es ist jedoch auch möglich, das Einstellelement 24 noch über diese Position hinaus weiter im Uhrzeigersinn zu verstellen, wie in Fig. 6 gezeigt ist. Die obere Wand des Gehäuses 20 bildet dann einen Anschlag für den Unterstützungskörper 26, so dass das Klappenblatt 16 der Schwenkbewegung des Einstellelements 24 nicht weiter folgen kann. Die Drehung des Tragkörpers 28 hat deshalb zur Folge, dass die Biegefeder 22 und das Einstellelement 24 elastisch ausgelenkt werden. Das Klappenblatt 16 wird folglich schon in der maximal geöffneten Stellung mit einer gewissen Kraft elastisch in Öffnungsrichtung vorgespannt, so dass es erst dann beginnt, sich in Schließrichtung zu bewegen, wenn der Volumenstrom einen gewissen Schwellenwert überschreitet. Auf diese Weise lässt sich ein noch höherer Sollvolumenstrom einstellen.

Wenn man die Einstellpositionen in Fig. 1, 5 und 6 miteinander vergleicht, so erkennt man, dass auch bei der Verstellung des Einstellelements 24 mit Hilfe des Tragkörpers 28 der Anschlag 30 an der Biegefeder 22 entlang gleitet, nun allerdings in Richtung auf die Achse 18. Die Folge ist, dass sich bei dieser Einstellbewegung die effektive Biegelänge der Biegefeder 22 verkürzt. In Fig. 6 verhält sich deshalb die Biegefeder 22 härter als in Fig. 1, und sie wird - bei gleicher Kraft am Anschlag 30 - weniger stark durchgebogen, während das elastische Einstellelement 24 entsprechend stärker durchgebogen wird. Bei der Einstellung für große Volumenströme (Fig. 6) wird deshalb das elastische Rückstellmoment durch die Federkennlinie des Einstellelements 24 dominiert, während es bei der Einstellung für kleine Volumenströme (Fig. 1) durch die Federkennlinie der Biegefeder 22 dominiert wird. Bei der Einstellung für mittlere Volumenströme (Fig. 5) tragen beide Federkennlinie etwa gleichwertig zum elastischen Rückstellmoment bei.

Dieser Zusammenhang ermöglicht es, das elastische Einstellelement 24 so zu gestalten, dass das Regelverhalten für große Volumenströme optimiert wird, während die Biegefeder 22 so gestaltet wird, dass das Regelverhalten für kleine Volumenströme optimiert wird. Auf diese Weise gelingt es, das Regelverhalten über den gesamten Bereich der einstellbaren Sollvolumenströme zu verbessern.

Bei der hier gezeigten Anordnung bilden die Achse 18 des Klappenblattes, die Achse 32 des Tragkörpers 28 und der Anschlag 30 ein spitzwinkliges Dreieck mit dem spitzen Winkel bei dem Anschlag 30. Die Positionen der Achsen 18 und 32 sind in diesem Beispiel so gewählt, dass sich in der Einstellposition nach Fig. 1 annähernd ein gleichschenkliges Dreieck ergibt. Je weiter man das Einstellelement 24 und das Klappenblatt 16 im Uhrzeigersinn verschwenkt, über die Position nach Fig. 5 in die Position nach Fig. 6, desto mehr verkürzt sich der durch die Biegefeder 22 gebildete Schenkel des Dreiecks, während der durch das Einstellelement 24 gebildete Schenkel seine Länge behält. Grundsätzlich ist es möglich, durch andere Wahl der Position der Achse 32 relativ zur Achse 18 zu erreichen, dass sich die Längenverhältnisse der Schenkel des Dreiecks auf andere Weise ändern, so dass sich ein entsprechend modifiziertes Regelverhalten ergibt.

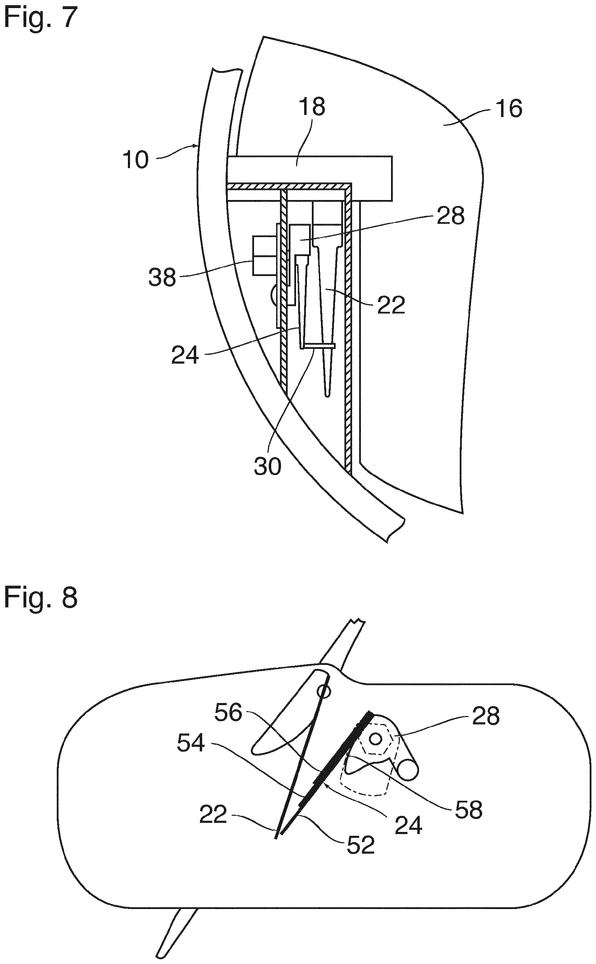

Bei der in Fig. 1 bis 6 gezeigten Anordnung liegt die Achse 32 außerhalb des Schwenkbereiches der Biegefeder 22, so dass die Biegefeder 22 und das Einstellelement 24 in Axialrichtung des Strömungskanals 10 gesehen hintereinander angeordnet sein können, wie in Fig. 3 gezeigt ist. Fig. 7 zeigt dagegen ein Ausführungsbeispiel, bei dem die Biegefeder 22 und das Einstellelement 24 in Richtung der Achse 18 des Klappenblattes 16 versetzt zueinander angeordnet sind. Der Anschlag 30 wird in diesem Fall durch einen Stift gebildet, der vom freien Ende des Einstellelements 24 ausgeht und in den Schwenkbereich der Biegefeder 22 hineinragt. Das erlaubt es, die Achse 32, auf der der Tragkörper 28 und der Sechskant 38 sitzen, wahlweise auch so anzuordnen, dass sie innerhalb des Schwenkbereichs der Biegefeder 22 liegt, wodurch der Spielraum zur Bestimmung der Form der Rückstellkennlinie weiter vergrößert wird.

Weitere Möglichkeiten zur Beeinflussung der Rückstellkennlinie bestehen darin, dass man eine Biegefeder verwendet, bei der die Materialstärke und/oder die Materialbeschaffenheit und Formgebung und damit die Steifigkeit über die Länge der Feder variiert. Entsprechend lässt sich auch die Federkennlinie des Einstellelements 24 beeinflussen. Weiterhin ist es möglich, die Biegefeder und/oder das Einstellelement als Blattfederpaket auszubilden.

Fig. 8 zeigt ein Beispiel, bei dem das Einstellelement 24 durch ein Blattfederpaket mit drei Blattfedern 52, 54, 56 gebildet wird, deren Länge zur Seite der Biegefeder 22 hin abnimmt. Die Blattfedern können beispielsweise auf ganzer Länge miteinander verklebt sein. Es ist jedoch auch möglich, die Blattfedern lediglich am Tragkörper 28 zu fixieren, so dass die einzelnen Blattfedern voneinander abgespreizt werden können und sich bei zunehmender elastischer Auslenkung nacheinander an die Biegefeder 22 anlegen. Wahlweise kann das Blattfederpaket auch so aufgebaut sein, dass die Länge der Blattfedern zu der der Biegefeder 22 entgegengesetzten Seite hin abnimmt.

Eine weitere Möglichkeit zur Beeinflussung der Federkennlinie des Einstellelements 24 besteht darin, dass auch der Tragkörper 28 als Unterstützungskörper mit einer Stützkontur 58 (Fig. 8) für die Blattfeder oder das Blattfederpaket ausgebildet wird, so dass sich das Einstellelement mit zunehmender elastischer Auslenkung immer weiter an die Stützkontur 58 anschmiegt.

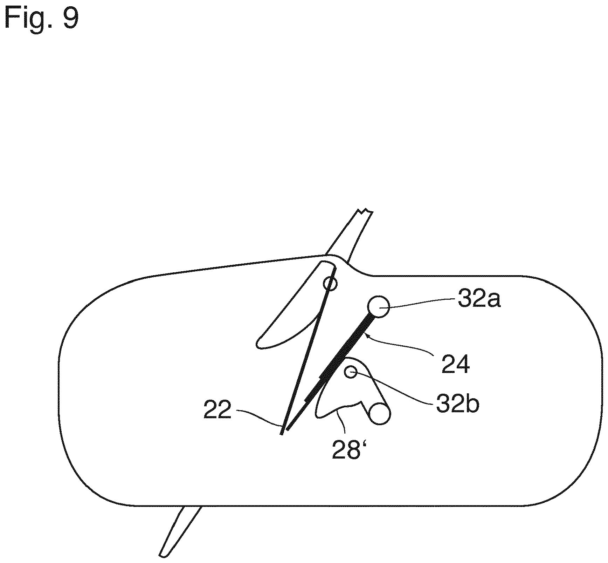

Fig. 9 zeigt eine Variante, bei der ein Ende des Einstellelements 24 fest oder drehbar an einer Achse 32a gehalten ist und bei der anstelle des Tragkörpers 28 ein Stützkörper 28' vorgesehen ist, der um eine separate Achse 32b drehbar und verstellbar ist und der in einer etwas gegenüber der Achse 32a versetzten Position an dem Einstellelement 24 angreift.

Es sind auch Ausführungsformen möglich, bei denen die Biegefeder 22 nicht gemeinsam mit dem Klappenblatt 16 um dessen Achse 18 schwenkbar ist, sondern auf andere Weise mit dem Klappenblatt gekoppelt ist.

## Patentansprüche

1. Volumenstromregler mit einem schwenkbar in einem Strömungskanal (10) angeordneten Klappenblatt (16), einer Biegefeder (22), die so mit dem Klappenblatt (16) gekoppelt ist, dass die Bewegung des Klappenblattes eine Bewegung der Biegefeder bewirkt, und mit einem Einstellelement (24), das einen Anschlag (30) für die Biegefeder bildet, **dadurch gekennzeichnet, dass** das Einstellelement (24) ein Ausleger ist, der an einem Ende einstellbar gehalten ist und dessen anderes Ende die Form einer Klinge hat, die den Anschlag (30) für die Biegefeder (22) bildet und bei fortgesetzter Bewegung der Biegefeder an dieser entlang gleitet.

2. Volumenstromregler nach Anspruch 1, bei dem das Einstellelement (24) um eine Achse (32; 32a) schwenkbar ist.

3. Volumenstromregler nach Anspruch 2, bei dem das Einstellelement (24) an einem Stützkörper (28') abgestützt ist, der um eine von der Achse (32a) des Einstellelements verschiedene Achse (32b) drehbar und verstellbar ist.

4. Volumenstromregler nach einem der Ansprüche 1 bis 3, bei dem das Einstellelement (24) biegeelastisch ist.

5. Volumenstromregler nach Anspruch 4, bei dem das Einstellelement (24) eine Blattfeder mit über seine Länge variierender Breite ist.

6. Volumenstromregler nach Anspruch 4 oder 5, bei dem das Einstellelement (24) ein Federpaket ist.

7. Volumenstromregler nach einem der Ansprüche 4 bis 6, bei dem das Einstellelement (24) an einer Stützkontur (58) unterstützt ist, an die es sich mit zunehmender elastischer Auslenkung anschmiegt.

8. Volumenstromregler nach einem der vorstehenden Ansprüche, bei dem die Biegefeder (22) eine Blattfeder mit über ihre Länge variierender Breite ist.

9. Volumenstromregler nach einem der vorstehenden Ansprüche, bei dem die Biegefeder (22) als Federpaket ausgebildet ist.

10. Volumenstromregler nach einem der vorstehenden Ansprüche, bei dem die Biegfeder (22) durch einen Unterstützungskörper (26) unterstützt ist, an den sie sich bei zunehmender elastischer Auslenkung anschmiegt.

11. Volumenstromregler nach einem der vorstehenden Ansprüche, bei dem das Klappenblatt (16) um eine in Bezug auf den Strömungskanal (10) feste Achse (18) schwenkbar ist.

12. Volumenstromregler nach Anspruch 11 , bei dem die Biegefeder (22) starr an der Achse (18) des Klappenblattes (16) gehalten ist.

13. Volumenstromregler nach einem der vorstehenden Ansprüche, bei dem ein Hauptteil des Einstellelements (24), das am freien Ende den Anschlag (30) trägt, in einer Richtung parallel zu der Achse (18) des Klappenblattes gegenüber der Biegefeder (22) versetzt ist.

14. Volumenstromregler nach einem der vorstehenden Ansprüche, bei dem die Biegefeder (22) und das Einstellelement (24) in einem Gehäuse (20) aufgenommen sind, das im Inneren des Strömungskanals (10) an dessen Umfangswand angeordnet ist, und bei dem das Klappenblatt (16) eine der Querschnittsform des Gehäuses (20) entsprechende Aussparung aufweist.

## Claims

1. A flow regulator having a flap (16) that is pivotably arranged in a flow passage (10), a bending spring (22) coupled to the flap (16) such that a movement of the flap induces a movement of the bending spring, and an adjusting member (24) forming a stop (30) for the bending spring, **characterized in that** the adjusting member (24) is a cantilever of which one end is held in adjustable fashion and the other end of which takes the form of a blade forming the stop (30) for the bending spring (22) and arranged to slide along the bending spring as the movement continues.

2. The flow regulator according to the claim 1, wherein the adjusting member (24) is pivotable about an axis (32; 32a).

3. The flow regulator according to claim 2, wherein the adjusting member (24) is supported at a support body (28') which is rotatable and adjustable about an axis (32b) different from the axis (32a) of the adjusting member.

4. The flow regulator according to any of the claims 1 to 3, wherein the adjusting member (24) is elastic under bending stress.

5. The flow regulator according to claim 4, wherein the adjusting member (24) is a leaf spring having a width which varies over the length of the leaf spring.

6. The flow regulator according to claim 4 or 5, wherein the adjusting member (24) is a spring package.

7. The flow regulator according to any of the claims 4 to 6, wherein the adjusting member (24) is supported at a support contour (58) to which it nestles with increasing elastic deflection.

8. The flow regulator according to any of the preceding claims, wherein the bending spring (22) is a leaf spring having a width that varies over the length of the leaf spring.

9. The flow regulator according to any of the preceding claims, wherein the bending spring (22) is configured as a spring package.

10. The flow regulator according to any of the preceding claims, wherein the bending spring (22) is supported by a support body (26) against which it nestles with increasing elastic deflection.

11. The flow regulator according to any of the preceding claims, wherein the flap (16) is pivotable about an axis (18) which is fixed relative to the flow passage (10).

12. The flow regulator according to claim 11, wherein the bending spring (22) is rigidly held at the axis (18) of the flap (16).

13. The flow regulator according to any of the preceding claims, wherein a main part of the adjusting member (24), which main part forms the stop (30) at its free end, is offset from the bending spring (22) in a direction in parallel with the axis (18) of the flap.

14. The flow regulator according to any of the preceding claims, wherein the bending spring (22) and the adjusting member (24) are accommodated in a housing (20) arranged inside of the flow passage (10) and at a peripheral wall of the latter, and the flap (16) has a recess corresponding to the cross-sectional shape of the housing (20).

## Revendications

1. Régulateur de débit volumétrique comportant une lame de clapet (16) agencée de manière à pouvoir pivoter dans un canal d'écoulement (10), un ressort de flexion (22) qui est couplé à la lame de clapet (16) de telle sorte que le mouvement de la lame de clapet entraîne un mouvement du ressort de flexion, et comportant un élément de réglage (24) qui forme une butée (30) pour le ressort de flexion, **caractérisé en ce que** l'élément de réglage (24) est un bras qui est maintenu de manière réglable à une extrémité et dont l'autre extrémité a la forme d'une lame qui forme la butée (30) pour le ressort de flexion (22) et qui glisse le long de celle-ci lors d'un mouvement continu du ressort de flexion.

2. Régulateur de débit volumétrique selon la revendication 1, dans lequel l'élément de réglage (24) peut pivoter autour d'un axe (32 ; 32a).

3. Régulateur de débit volumétrique selon la revendication 2, dans lequel l'élément de réglage (24) est supporté par un élément d'appui (28') qui peut tourner autour d'un axe (32b) différent de l'axe (32a) de l'élément de réglage et qui peut être réglé.

4. Régulateur de débit volumétrique selon l'une des revendications 1 à 3, dans lequel l'élément de réglage (24) est élastique en flexion.

5. Régulateur de débit volumétrique selon la revendication 4, dans lequel l'élément de réglage (24) est un ressort à lames dont la largeur varie sur sa longueur.

6. Régulateur de débit volumétrique selon la revendication 4 ou 5, dans lequel l'élément de réglage (24) est un bloc-ressort.

7. Régulateur de débit volumétrique selon l'une des revendications 4 à 6, dans lequel l'élément de réglage (24) est supporté par un contour de support (58) dont il épouse la forme avec une déviation élastique croissante.

8. Régulateur de débit volumétrique selon l'une des revendications précédentes, dans lequel le ressort de flexion (22) est un ressort à lames dont la largeur varie sur sa longueur.

9. Régulateur de débit volumétrique selon l'une des revendications précédentes, dans lequel le ressort de flexion (22) est formé comme un bloc-ressort.

10. Régulateur de débit volumétrique selon l'une des revendications précédentes, dans lequel le ressort de flexion (22) est supporté par un élément de support (26) dont il épouse la forme avec une déviation élastique croissante.

11. Régulateur de débit volumétrique selon l'une des revendications précédentes, dans lequel la lame de clapet (16) peut pivoter autour d'un axe (18) fixe par rapport au canal d'écoulement (10).

12. Régulateur de débit volumétrique selon la revendication 11, dans lequel le ressort de flexion (22) est fixement maintenu sur l'axe (18) de la lame de clapet (16).

13. Régulateur de débit volumétrique selon l'une des revendications précédentes, dans lequel une partie principale de l'élément de réglage (24) qui supporte la butée (30) sur l'extrémité libre, est déplacée par rapport au ressort de flexion (22) dans une direction parallèle à l'axe (18) de la lame de clapet.

14. Régulateur de débit volumétrique selon l'une des revendications précédentes, dans lequel le ressort de flexion (22) et l'élément de réglage (24) sont reçus dans un boîtier qui est agencé à l'intérieur du canal d'écoulement (10) sur sa paroi circonférentielle, et dans lequel la lame de clapet (16) comporte un évidement correspondant à la forme en coupe transversale du boîtier (20).
